# EUROPEAN PATENT APPLICATION

(11) **EP 4 836 088 A1**
(43) Date of publication of application: **04.11.2026**
(21) Application number: 26155874.6
(22) Date of filing: 02.02.2026
(51) Int. Cl.: H01M 10/613, H01M 10/6556, H01M 50/204, H01M 10/42, H01M 10/653, H01M 50/574

(54) **ENERGY STORAGE SYSTEM**

(30) Priority: 02.05.2025 KR 20250058408
(71) Applicant: SAMSUNG SDI CO., LTD., Yongin-si, Gyeonggi-do 17084 (KR)
(72) Inventor: JUNG, Byunghwa, Yongin-si, Gyeonggi-do 17084 (KR)
(74) Representative: Regimbeau

(57) **Abstract**

An energy storage system includes: a plurality of battery modules; a battery rack configured to house the battery modules; and a control unit configured to be electrically connected to the battery modules, wherein the plurality of battery modules form a plurality of battery module rows, and the control unit includes a plurality of battery control units configured to be electrically connected to positive terminals or negative terminals of the plurality of battery module rows and a cooling element configured to cool the plurality of battery control units.

## Description

### FIELD

Aspects of some embodiments of the present disclosure relate to an energy storage system.

### TECHNICAL BACKGROUND

An energy storage system is a system configured to integrate a battery to facilitate energy storage and management. The energy storage system may be used as backup power for a renewable energy and as an emergency power in a home, a factory and a business, etc. According to some embodiments, as power consumption increases, a need for increased capacity of the energy storage system is being demanded.

The above information disclosed in this Background section is only for enhancement of understanding of the background and therefore the information discussed in this Background section does not necessarily constitute prior art.

### SUMMARY

The present disclosure provides an energy storage system having a simplified configuration that includes more battery modules. According to the invention, there is provided an energy storage system as defined in claim 1 and in the depending claims.

However, the characteristics of embodiments according to the present disclosure are not limited to the characteristics mentioned above, and other characteristics of embodiments according to the present disclosure which are not mentioned may be understood by the following description and may be more clearly understood by the embodiments of the present disclosure. According to some embodiments, it may be confirmed that the problems to be solved by the embodiments according to present disclosure and aspects of some embodiments may be implemented by the means and combinations thereof described in the claims, and their equivalents.

An energy storage system according to some embodiments of the present disclosure may include: a plurality of battery modules; a battery rack configured to house the battery modules; and a control unit configured to be electrically connected to the battery modules, wherein the plurality of battery modules form a plurality of battery module rows, and the control unit includes a plurality of battery control units configured to be electrically connected to positive terminals or negative terminals of the plurality of battery module rows and a cooling element configured to cool the plurality of battery control units.

According to some embodiments, each of the battery control units may be electrically connected to two or more battery module rows.

According to some embodiments, the cooling element may further include a thermally conductive gap filler layer positioned on the cooling element.

According to some embodiments, the battery control units may be arranged on the thermally conductive gap filler layer.

According to some embodiments, each of the battery control units includes a body having one side on which a connection terminal is arranged, and at least some of the connection terminals may be arranged in contact with an upper surface of the thermally conductive gap filler layer.

According to some embodiments, the control unit may further include a battery management system and a circuit breaker.

According to some embodiments, among the battery control units, the battery module rows connected to the positive terminals of the battery module rows form a lower layer, and among the battery control units, the battery module rows connected to the negative terminals of the battery module rows form an upper layer, the circuit breaker is positioned between the lower layer and the upper layer, and the battery management system may be positioned on the upper layer.

According to some embodiments, the control unit may be positioned at the center of the plurality of battery module rows.

According to some embodiments, the plurality of battery module rows and the plurality of battery control units may be connected through a cable.

According to some embodiments, each of the plurality of battery modules includes a plurality of battery cells and a cooling plate for cooling the plurality of battery cells, and the same refrigerant may be supplied to the cooling plate and the cooling element.

An energy storage system according to some embodiments of the present disclosure includes: a plurality of battery modules constituting a plurality of battery module rows; and a control unit configured to be electrically connected to the battery modules, wherein the control unit includes a plurality of battery control units configured to be electrically connected to positive terminals or negative terminals of the plurality of battery module rows and a cooling element configured to cool the plurality of battery control units, each of the plurality of battery modules includes a plurality of battery cells and a first cooling plate positioned at the lower part of the plurality of battery cells, and the same refrigerant may be supplied to the first cooling plate and the cooling element.

According to some embodiments, the plurality of battery cells constitute a battery cell array arranged in a first direction, and the plurality of battery cell arrays are arranged in a direction perpendicular to the first direction, and each of the plurality of battery modules may further include a second cooling plate positioned between two adjacent battery cell arrays.

According to some embodiments, the first flow path of the first cooling plate and the second flow path of the second cooling plate may be connected to each other.

According to some embodiments, the second cooling plate may include a rupture part having a lower melting point than the second flow path on the path of the second flow path.

According to some embodiments, each of the battery control units may be electrically connected to two or more battery module rows.

According to some embodiments, the cooling element may further include a thermally conductive gap filler layer positioned on the cooling element.

According to some embodiments, each of the battery control units includes a body having one side on which a connection terminal is arranged, and at least some of the connection terminals and the body may be arranged in contact with an upper surface of the thermally conductive gap filler layer.

According to some embodiments, the control unit further includes a battery management system and a circuit breaker, among the battery control units, the battery module rows connected to the positive terminals of the battery module rows form a lower layer, and among the battery control units, the battery module rows connected to the negative terminals of the battery module rows form an upper layer, the circuit breaker is positioned between the lower layer and the upper layer, and the battery management system may be positioned on the upper layer.

According to some embodiments, the control unit may be positioned at the center of the plurality of battery module rows.

According to some embodiments, the plurality of battery module rows and the plurality of battery control units may be connected through a cable.

An energy storage system according to the present disclosure may secure an internal space capable of accommodating a battery module by simplifying a configuration, thereby increasing the amount of power. According to some embodiments, by cooling battery control units, the stability and performance of the energy storage system may be relatively improved.

### BRIEF DESCRIPTION OF THE DRAWINGS

The above and other aspects, features, and characteristics of certain embodiments of the disclosure will be more apparent from the following description taken in conjunction with the accompanying drawings in which:
FIG. 1 is a front view schematically illustrating an energy storage system according to some embodiments of the present disclosure;
FIG. 2 is a perspective view schematically illustrating an example of battery modules inserted into a battery rack of FIG. 1;
FIG. 3 is an exploded perspective view schematically illustrating an example of the battery module of FIG. 2;
FIG. 4 is a diagram schematically illustrating an electrical connection between a control unit of FIG. 1 and a battery module row;
FIG. 5 is a diagram schematically illustrating an electrical connection between the control unit of FIG. 1 and battery modules; and
FIG. 6 is a perspective view schematically illustrating an example of a battery control unit.

### DETAILED DESCRIPTION

It is to be understood that the present disclosure is susceptible to various changes and may have numerous embodiments. Specific embodiments are illustrated in the drawings and described in the detailed description. However, this is not intended to limit the present disclosure to a specific embodiment, and it should be understood to include all changes, equivalents, and substitutes included in the technical scope of the present disclosure. In explaining the present disclosure, if it is determined that a detailed description of a related known technology may obscure the gist of the present disclosure, some description may be omitted for simplicity of explanation.

The terms "first," "second," etc. may be used to describe various components, but the components should not be limited by the terms. These terms may be used to distinguish one component from another.

The terms used in the present application are used only to describe specific embodiments and are not intended to limit the present disclosure. Singular expressions include plural expressions unless the context clearly indicates otherwise. According to some embodiments, in each drawing, components are exaggerated, omitted, or schematically illustrated for convenience of description and clarity, and the size of each component does not entirely reflect the actual size.

In the description of each component, when a component is described as formed "on" or "under" another, the terms "on" and "under" refer to both direct formations and those through the intervention of other components, and the criteria for "on" and "under" are explained based on the drawings.

Hereinafter, embodiments of the present disclosure will be described in detail with reference to the attached drawings. In the drawings, identical or corresponding components are given the same reference numerals, and redundant descriptions thereof will be omitted.

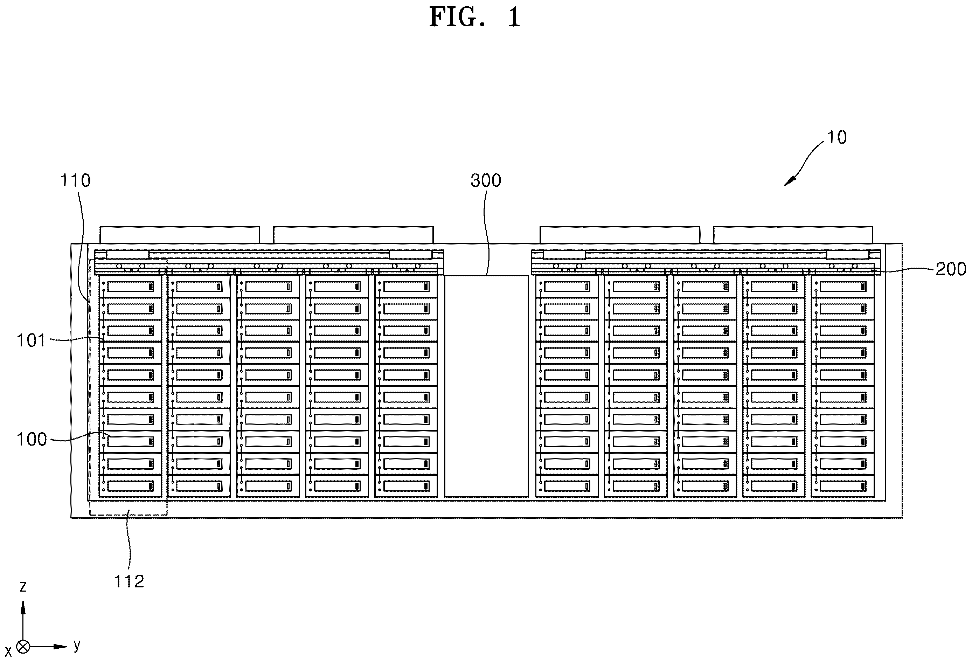

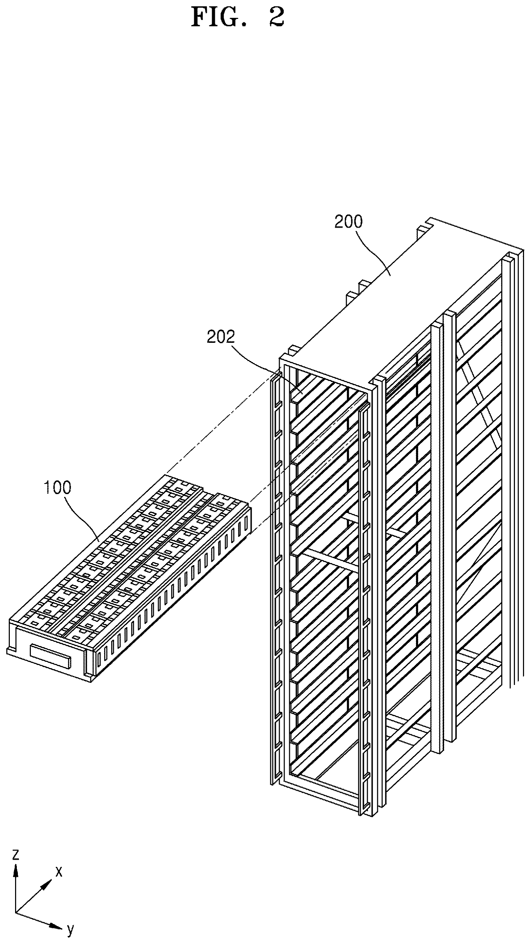

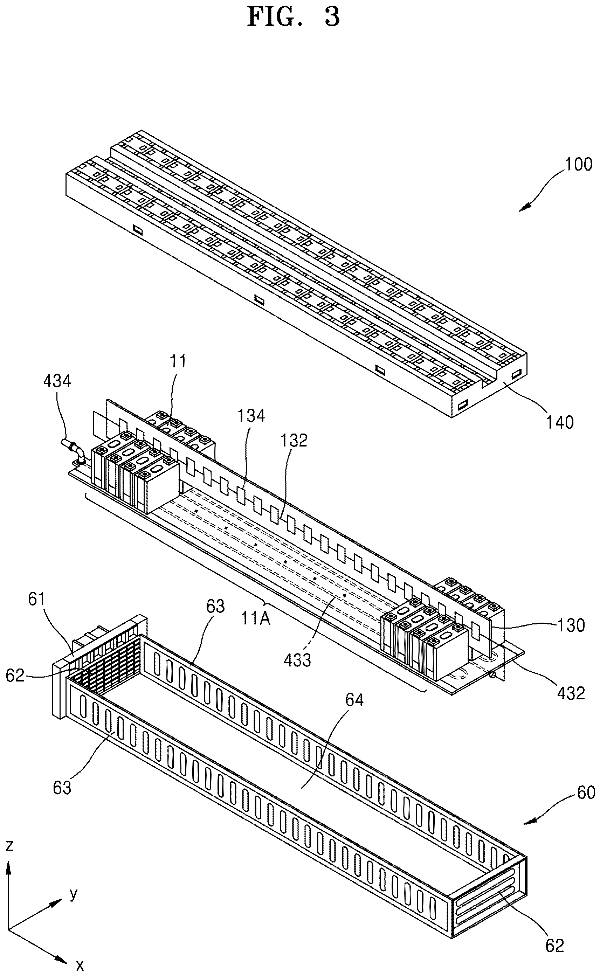

FIG. 1 is a front view schematically illustrating an energy storage system according to some embodiments of the present disclosure, FIG. 2 is a perspective view schematically illustrating an example of battery modules inserted into a battery rack of FIG. 1, and FIG. 3 is an exploded perspective view schematically illustrating an example of the battery modules of FIG. 2.

Referring to FIGS. 1 to 3, an energy storage system 10 according to some embodiments of the present disclosure may include a plurality of battery modules 100, a battery rack 200 configured to house the plurality of battery modules 100, and a control unit 300 electrically connected to the battery modules 100.

As shown in FIG. 3, each of the plurality of battery modules 100 may include a plurality of battery cells 11 arranged so that their main surfaces are adjacent to each other along a first direction (x), and a housing 60 configured to house the battery cells 11. Here, the main surface of the battery cells 11 refers to the widest surface among side surfaces of the battery cells 11.

According to some embodiments, FIG. 3 illustrates an example in which the plurality of battery cells 11 are arranged in parallel along a second direction (y) perpendicular to the first direction (x) in a plane. That is, in FIG. 3, the battery cells 11 are arranged in the first direction (x) to form a battery cell array 11A, and a configuration in which two of these battery cell arrays 11A are arranged in the second direction (y) is illustrated, but is not limited thereto, and the battery module 100 may include a varying number of battery cells 11.

According to some embodiments, although FIG. 3 illustrates an example in which a plurality of battery cells 11 are of prismatic type, but embodiments according to the present disclosure are not limited thereto, and the plurality of battery cells 11 may be pouch type or cylindrical type.

The housing 60 may house the battery cells 11 by including a pair of end plates 62 respectively arranged at opposite ends of the battery cell array 11A formed by the battery cells 11, a pair of side plates 63 arranged on the sides of the battery cells 11 and combined with the pair of end plates 62, and a lower plate 64 configured to support the battery cells 11.

A connection part 61 may be further positioned on an outer side of at least one of the pair of end plates 62. The connection part 61 may be provided with a connection terminal for electrically connecting the battery modules 100 to other components, an inlet 434 for supplying a cooling medium to a first cooling plate 432, etc.

The first cooling plate 432 may be positioned between the lower plate 64 and the battery cells 11. According to some embodiments, a second cooling plate 130 may be further positioned between two adjacent battery cell arrays 11A. According to some embodiments, the second cooling plate 130 may be positioned perpendicular to the first cooling plate 432.

The first cooling plate 432 may include a first flow path 433, and the second cooling plate 130 may include a second flow path 132.

The first flow path 433 is connected to the inlet 434 positioned at the connection part 61 and may be supplied with refrigerant from the outside. According to some embodiments, the second flow path 132 is connected to the first flow path 433, so that the same refrigerant may flow through the first cooling plate 432 and the second cooling plate 130.

According to some embodiments, the second cooling plate 130 may further include a rupture part 134 on a path of the second flow path 132. The rupture part 134 may include a material having a lower melting point than the second flow path 132, and may be configured to melt in response to thermal runaway occurring in any one of the battery cells 11. Therefore, when thermal runaway of any one of the battery cells 11 occurs, the refrigerant flowing in the second flow path 132 is discharged through the melted rupture part 134, thereby flooding the battery cells 11 and preventing or reducing thermal runaway from spreading to the plurality of battery cells 11.

The cover part 140 may be combined with the housing 60 to define an internal space in which the battery cells 11 are housed. According to some embodiments, a bus bar for electrically connecting the battery cells 11, a sensing part for detecting a temperature of the battery cells 11, a protection circuit module for controlling an operation of the battery cells 11, etc. may be arranged in the cover part 140.

As shown in FIG. 2, the plurality of battery modules 100 may be loaded onto one battery rack 200.

According to some embodiments, the battery rack 200 includes a plurality of sliding guide parts 202 spaced apart from each other along a height direction (z) of the battery rack 200 and extend along the first direction (x), and the battery modules 100 may be mounted on the battery rack 200 by sliding in the first direction (x) while both corners of the bottom are supported by the pair of sliding guide parts 202.

In this manner, the plurality of battery modules 100 may be mounted on one battery rack 200 along the height direction (z) of the battery rack 200 to form one battery module row 110. According to some embodiments, as shown in FIG. 1, a plurality of battery module rows 110 may be arranged in a plurality of rows along the second direction (y) perpendicular to the first direction (x) on a plane.

The battery modules 100 forming the battery module rows 110 may be electrically connected to each other. According to some embodiments, the plurality of battery modules 100 arranged in one battery module row 110 may be electrically connected to each other by the bus bar 101.

According to some embodiments, FIG. 1 illustrates that the energy storage system 10 includes ten battery module rows 110, but embodiments according to the present disclosure are not limited thereto.

The control unit 300 may check a status of the battery modules 100 and control a charging/discharging and a current flow. To this end, the control unit 300 may be electrically connected to the plurality of battery module rows 110. According to some embodiments, the control unit 300 may be positioned at the center of the plurality of battery module rows 110 to facilitate electrical connection with the plurality of battery module rows 110. That is, the battery modules 100 are not respectively connected to the control unit 300, but may be electrically connected to the control unit 300 in units of the plurality of battery module rows 110.

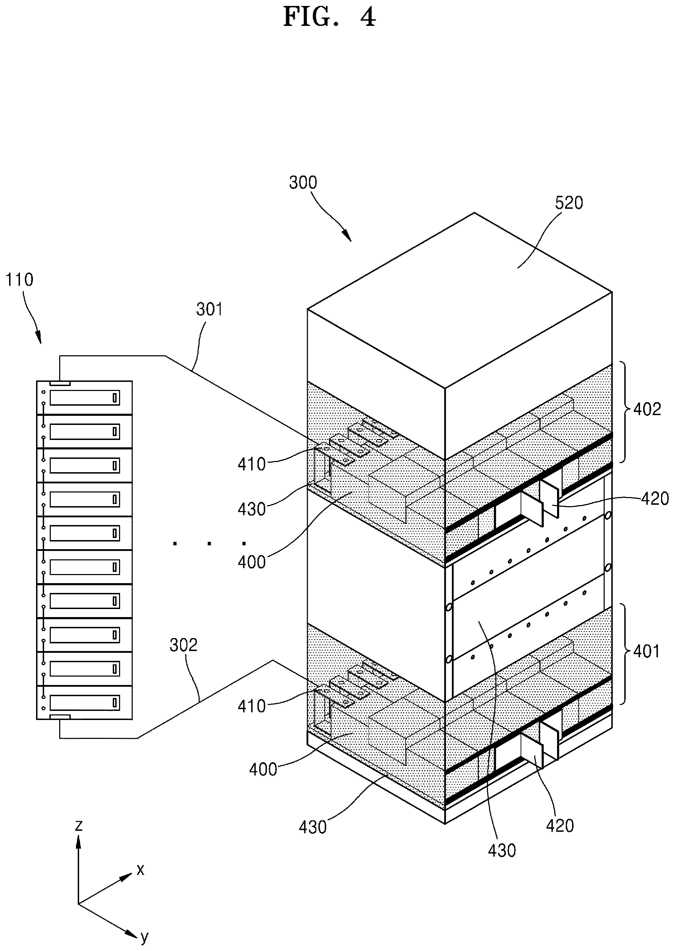

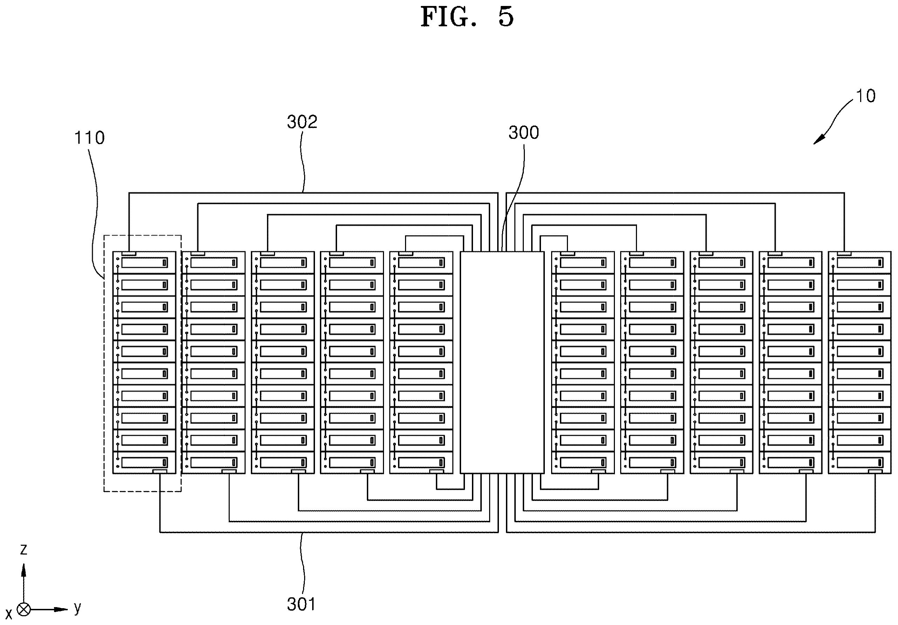

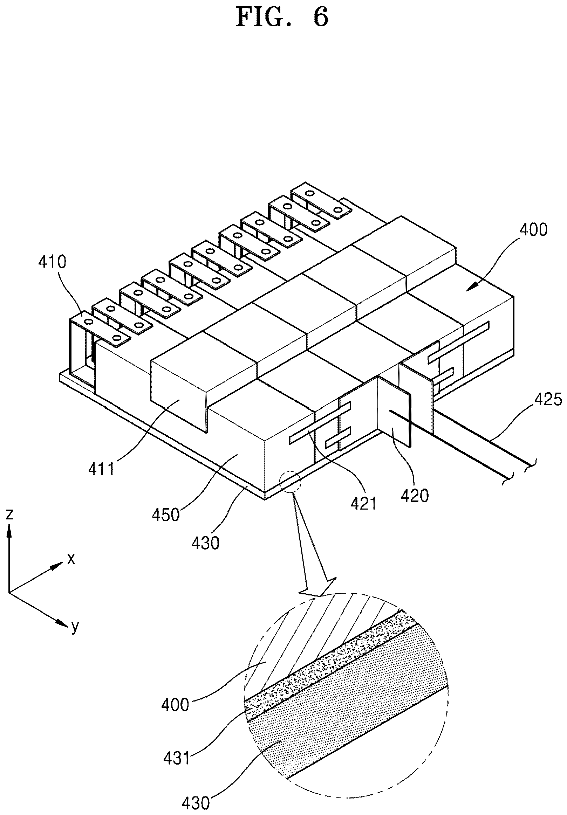

FIG. 4 is a diagram schematically illustrating an electrical connection between a control unit of FIG. 1 and a battery module row, FIG. 5 is a diagram schematically illustrating an electrical connection between the control unit of FIG. 1 and battery modules, and FIG. 6 is a perspective view schematically illustrating an example of a battery control unit.

Referring to FIGS. 4 to 6, the control unit 300 may include battery control units 400 each electrically connected to at least one battery module row 110, a cooling element 430 for cooling the battery control units 400, a battery management system (BMS) 520 and a circuit breaker 440.

Each of the battery control units 400 may be electrically connected to the plurality of battery module rows 110 by cables 301 and 302. For example, one battery control unit 400 may be connected to two battery module rows 110. However, the present disclosure is not limited thereto, and one battery control unit 400 may be connected to three or more battery module rows 110.

Each of the battery control units 400 may include a body 450 in which a connection terminal 410 to which the cables 301 and 302 are connected is arranged on one side, an insulation part 411 and a connection element 421.

Inside the body 450, a contactor, a fuse and a shunt resistor, etc. may be included to control a current flow supplied from the battery module rows 110. Therefore, when an abnormality such as overcurrent is detected in the battery control units 400, the current flow may be controlled by interrupting the current flow using the contactor and the fuse. The shunt resistor may be connected to the connection element 421.

The insulation part 411 may include a surge protection device (SPD), an emergency stop board (E-Stop board), etc. to prevent or reduce external surges and short circuits.

The connection element 421 is connected to an external connection terminal part 420, and the external connection terminal part 420 is connected to an external grid 425, thereby supplying the power of the energy storage system 10 to the external grid 425.

According to some embodiments, one battery control unit 400 may include a plurality of connection terminals 410, and each connection terminal 410 may be connected to a corresponding battery module row 110.

According to some embodiments, one battery control unit 400 may include two connection terminals 410, and the two connection terminals 410 may be connected to corresponding battery module rows 110. Therefore, one battery control unit 400 may be electrically connected to two battery module rows 110. Therefore, compared to an alternative arrangement having a battery control part for each battery module row 110, a space where the battery control part is positioned may be secured, and additional battery modules 100 may be arranged in the secured additional space, thereby relatively increasing the energy density of the energy storage system 10.

According to some embodiments, a plurality of battery control units 400 may be arranged on the cooling element 430. Therefore, overload due to heat generation of the plurality of battery control units 400 may be prevented or reduced, so that the stability and performance of the energy storage system 10 may be relatively improved.

The cooling element 430 may include a flow path through which the refrigerant may flow inside. In this case, the same refrigerant as the refrigerant supplied to the first cooling plate (432 in FIG. 3) for cooling the battery module (100 in FIG. 3) may be supplied to the cooling element 430. For example, in a main flow path supplying the refrigerant, flow paths may each be branched to the battery module (100 in FIG. 3) and the cooling element 430. Therefore, there may be no need for an additional configuration for supplying refrigerant to the cooling element 430, and the configuration for cooling the plurality of battery control units 400 may be relatively simplified.

According to some embodiments, the cooling element 430 may include a thermally conductive gap filler layer 431 positioned on an upper surface of the cooling element 430. For example, the thermally conductive gap filler layer 431 may include a siloxane-based resin and thermally conductive inorganic particles. According to some embodiments, the siloxane-based resin may include a polydimethylsiloxane, a polymethylphenylsiloxane, a silsesquioxane, a hydrogenated siloxane, etc., and the thermally conductive inorganic particles may include ceramic-based fillers such as an alumina, a boron nitride, an aluminum nitride, and a silica, metal-based fillers such as an aluminum, a copper, and a silver, and carbon-based fillers such as a graphite, a carbon nanotube, and a graphene.

The cooling efficiency of the battery control units 400 may be relatively improved by the thermally conductive gap filler layer 431, and the position of the battery control units 400 may not move easily due to the adhesiveness of the surface of the thermally conductive gap filler layer 431, and vibrations may be attenuated, so that when an external shock is applied, the shock transmission to the battery control units 400 is minimized or reduced, thereby relatively improving the structural stability of the battery control units 400.

According to some embodiments, at least a part of the connection terminal 410 protruding outward from the body 450 and connected to the cables 301 and 302 may be positioned in contact with an upper surface of the thermally conductive gap filler layer 431. Therefore, the connection terminal 410 is also cooled by the cooling element 430, so that the risk of poor connection, fire, etc. may be reduced even when the temperature rises due to resistance, etc.

According to some embodiments, as shown in FIG. 6, the connection terminal 410 has a bent shape, thereby being divided into an upper part connected to the cables 301 and 302, and a lower part in contact with the cooling element 430. However, embodiments according to the present disclosure are not limited thereto, and the connection terminal 410 is not bent, the upper surface of the connection terminal 410 is connected to the cables 301 and 302, and a lower surface of the connection terminal 410 may be in contact with the cooling element 430.

According to some embodiments, the battery control units 400 may be electrically connected to positive terminals or negative terminals of the battery module rows 110.

For example, when there are ten battery module rows 110 and one battery control unit 400 is connected to two battery module rows 110, five battery control units 400 may be connected to the positive terminals of the ten battery module row 110 through the first cable 301, and the remaining five battery control units 400 may be connected to the negative terminals of the ten battery module rows 110 through the second cable 302. Therefore, the number of battery control units 400 may be equal to the number of the plurality of battery module rows 110.

The battery control units 400 electrically connected to the positive terminals or negative terminals of the battery module rows 110 may be connected to the battery management system (BMS) 520 and the circuit breaker 440.

Through this, by integrating the battery control part that was previously positioned on an upper side of each battery module row 110 with the control unit 300, the space where the existing battery control part is positioned may be secured, and additional battery modules 100 may be arranged in the secured additional space, thereby increasing the energy density of the energy storage system 10.

According to some embodiments, the battery control units 400 connected to different terminals of the battery module rows 110 may be arranged at different positions.

According to some embodiments, as shown in FIG. 4, the battery module rows 110 connected to the positive terminals of the battery module rows 110 may form a lower layer 401, and the battery module rows 110 connected to the negative terminals of the battery module rows 110 may form an upper layer 402. The cooling element 430 may each be positioned at the lower part of the battery module rows 110 arranged at the lower layer 401 and the upper layer 402.

According to some embodiments, the battery control units 400 arranged in the lower layer 401 may be connected to the positive terminals arranged in one side of the battery module rows 110 through the first cable 301, and the battery control units 400 arranged in the upper layer 402 may be connected to the negative terminals arranged in another side of the battery module rows 110 through the second cable 302. Therefore, the connection between the battery control units 400 and the battery module rows 110 may be simplified.

According to some embodiments, the circuit breaker 440 may be positioned between the lower layer 401 and the upper layer 402, and the battery management system 520 may be positioned on the upper part of the upper layer 402. Therefore, the energy storage system may have a compact configuration, thereby achieving relatively excellent space utilization.

Although aspects of some embodiments of the present disclosure have been described with reference to some embodiments and drawings, embodiments according to the present disclosure are not limited thereto, and it will be apparent to a person skilled in the art that various changes and alterations may be possible without departing from the scope of equivalents described in the following claims, and their equivalents.

## Claims

1. An energy storage system comprising:
a plurality of battery modules (100); and
a control unit (300) configured to be electrically connected to the battery modules (100), wherein
the plurality of battery modules (100) form a plurality of battery module rows (110), and
the control unit (300) includes a plurality of battery control units (400) configured to be electrically connected to positive terminals or negative terminals of the plurality of battery module rows (400) and a cooling element (430) configured to cool the plurality of battery control units (400).

2. The energy storage system as claimed in claim 1, wherein
each of the battery control units (400) is electrically connected to two or more battery module rows (110).

3. The energy storage system as claimed in claim 1 or claim 2, wherein
the cooling element (430) further includes a thermally conductive gap filler layer (431) positioned on the cooling element (430).

4. The energy storage system as claimed in claim 3, wherein
the battery control units (400) are arranged on the thermally conductive gap filler layer (431).

5. The energy storage system as claimed in claim 3 or claim 4, wherein
each of the battery control units (400) includes a body having one side on which a connection terminal (410) is arranged, and
at least some of the connection terminals (410) contact an upper surface of the thermally conductive gap filler layer (431).

6. The energy storage system as claimed in any one of claims 1 to 5, wherein
the control unit (300) further includes a battery management system (520) and a circuit breaker (440).

7. The energy storage system as claimed in claim 6, wherein
among the battery control units (400), battery module rows (110) connected to the positive terminals of the battery module rows (110) form a lower layer, among the battery control units (400), battery module rows (110) connected to the negative terminals of the battery module rows (110) form an upper layer, and
the circuit breaker (440) is between the lower layer and the upper layer, and the battery management system (520) is on the upper layer.

8. The energy storage system as claimed in any one of claims 1 to 7, wherein
the control unit (300) is at a center of the plurality of battery module rows (110).

9. The energy storage system as claimed in any one of claims 1 to 8, wherein
the plurality of battery module rows (110) and the plurality of battery control units (400) are connected through a cable (301, 302).

10. The energy storage system as claimed in any one of claims 1 to 9, wherein
each of the plurality of battery modules (100) includes a plurality of battery cells (11) and a cooling plate for cooling the plurality of battery cells (11), and
a same refrigerant is configured to be supplied to the cooling plate and the cooling element (430).

11. The energy storage system as claimed in any one of claims 1 to 9, wherein
each of the plurality of battery modules (100) includes a plurality of battery cells (11) and a first cooling plate (432) under the plurality of battery cells (11), and
a same refrigerant is configured to be supplied to the first cooling plate (432) and the cooling element (430).

12. The energy storage system as claimed in claim 11, wherein
the plurality of battery cells (11) constitute a battery cell array (11A) arranged in a first direction, and the battery cell array (11A) is arranged in a plurality in a direction perpendicular to the first direction, and
each of the plurality of battery modules (100) further includes a second cooling plate (130) positioned between two adjacent battery cell arrays (11A).

13. The energy storage system as claimed in claim 12, wherein
a first flow path of the first cooling plate (432) and a second flow path of the second cooling plate (130) are connected to each other.

14. The energy storage system as claimed in claim 13, wherein
the second cooling plate (130) includes a rupture part (134) having a lower melting point than the second flow path on a path of the second flow path.

15. The energy storage system of any one of claims 1 to 14, further comprising a battery rack (200) configured to house the battery modules (100).
